Europäisches Patentamt

European Patent Office

Office européen des brevets

(11) Veröffentlichungsnummer: **0 154 206 B1**

# EUROPÄISCHE PATENTSCHRIFT

(45) Veröffentlichungstag der Patentschrift: **10.04.91**    (51) Int. Cl.⁵: **A47J 31/40**

(21) Anmeldenummer: **85101431.6**

(22) Anmeldetag: **11.02.85**

---

(54) **Vorrichtung zur Zubereitung von Heissgetränken.**

---

(30) Priorität: **27.02.84 DE 3407030**

(43) Veröffentlichungstag der Anmeldung:
**11.09.85 Patentblatt 85/37**

(45) Bekanntmachung des Hinweises auf die
Patenterteilung:
**10.04.91 Patentblatt 91/15**

(84) Benannte Vertragsstaaten:
**AT BE CH DE FR GB IT LI LU NL SE**

(56) Entgegenhaltungen:
**DE-A- 2 945 360
US-A- 4 188 863
US-A- 4 196 658
US-A- 4 300 442**

(73) Patentinhaber: **Gesamat AG
Margarethenstrasse
CH-6257 Ballwil(CH)**

(72) Erfinder: **Frei, Hanspeter
Vogelsangstrasse 26
CH-8618 Oetwil am See(CH)**
Erfinder: **Schmed, Arthur
Langrütistrasse 87
CH-8635 Oberdürnten(CH)**

(74) Vertreter: **Rottmann, Maximilian R.
c/o Rottmann + Quehl AG Glattalstrasse 37
CH-8052 Zürich(CH)**

Rank Xerox (UK) Business Services

## Beschreibung

Die vorliegende Erfindung bezieht sich auf eine Vorrichtung zur Zubereitung von Heissgetränken, insbesondere von Kaffee. Im besonderen ist hier von den sogenannten "Expressomaschinen" die Rede, die vermehrt auch in Haushaltungen Verwendung finden und die es erlauben, eine beliebige Anzahl von Portionen frischen Kaffees nacheinander zuzubereiten.

Im Prinzip ähnliche Maschinen werden auch gewerblich verwendet, z.B. in Gaststätten, Betriebskantinen und dgl. Der wesentliche Unterschied ist dabei lediglich darin zu sehen, dass die Dosierung und Abgabe des Kaffeepulvers vor der Zubereitung des Getränks sowie die Entfernung des ausgelaugten Kaffeepulvers nach der Getränkezubereitung mehr oder weniger selbsttätig erfolgt. Dies gestattet eine raschere und damit rationellere Arbeitsweise.

Ein prinzipieller Nachteil, der sowohl bei Kaffeemaschinen für den Haushalt als auch bei gewerblichen Maschinen vorhanden ist, dürfte in der Tatsache zu erblicken sein, dass gewisse Teile der Vorrichtung einer Verschmutzung ausgesetzt sind. Insbesondere sind dies diejenigen Vorrichtungsteile, welche einerseits mit dem Kaffeepulver, namentlich während des Aufbrühens, und andererseits mit dem zubereiteten Getränk in Berührung gelangen. Es drängt sich im Interesse der Betriebshygiene auf, die genannten Vorrichtungsteile von Zeit zu Zeit zu reinigen. Währenddem dieser Reinigungsvorgang bei Haushaltmaschinen lediglich mit gewissen Unahnnehmlickeiten und zusätzlicher Arbeit verbunden ist, fällt bei gewerblich verwendeten Maschinen der Betriebsausfall während der Reinigungszeit ins Gewicht. Bekannte Maschinen dieser Art müssen nämlich vollständig ausser Betrieb gesetzt und vorzugsweise vom Stromnetz getrennt werden, damit die betroffenen Teile einer gründlichen Reinigung unterzogen werden können. Meistens muss zudem die Maschine eine gewisse Zeit vorher stillgelegt werden, damit die zu reinigenden Teile mindestens zu einem gewissen Grad abkühlen können. Nach erfolgter Reinigung dauert es ausserdem eine bestimmte Zeit, bis die Betriebsbereitschaft der Maschine wieder erstellt ist.

Es ist die Aufgabe der vorliegenden Erfindung, eine Vorrichtung der eingangs genannten Art so auszubilden, dass die vorerwähnten Nachteile weitgehend ausgeschaltet sind und insbesondere eine Kaffeemaschine, namentlich eine Expressomaschine so auszugestalten, dass die zur Verschmutzung neigenden Vorrichtungsteile schnell und mühelos gereinigt werden können.

Die Erfindung geht dabei von einer Vorrichtung zur Zubereitung von Heissgetränken, insbesondere von Kaffee, aus, mit einem Gehäuse, einem Frischwasseranschluss bzw. einem Frischwasser-Vorratstank, einem Heizorgan zur Erhitzung des Frischwassers, einer Anordnung zur Förderung des erhitzten Frischwassers unter Druck zu einer Brühkammer, die mit einem Verschlussorgan und mit einem Getränkepulvereinlass sowie mit einem Getränkeauslass versehen ist, und gegebenenfalls mit einer Anordnung zum Ausstossen bzw. Entfernen des ausgelaugten Getränkepulvers aus bzw. von der Brüh kammer, sowie mit Antriebs- und Steuermitteln für die genannten Anordnungen und Organe, wobei vorgegebene Teile der Vorrichtung als Baugruppe lösbar mit dem Gehäuse verbunden sind, und wobei die so gebildete Baugruppe als Einschubmodul ausgebildet und als Ganzes in das Gehäuse einschiebbar ist.

Die erfindungsgemässe Aufgabe wird bei einer Vorrichtung dieser Art dadurch gelöst, dass die Vorrichtung Baugruppenträger aufweist, welche die einer Verschmutzung durch das Getränkepulver bzw. durch das zubereitete Getränk unterworfenen Teile, nämlich die Brühkammer, das Verschlussorgan, der Getränke-Auslass sowie die Anordnung zum Ausstossen bzw. Entfernen des ausgelaugten Getrankepulvers, zur Bildung der Baugruppe aufnehmen, während-dem die verbleibenden Teile der Vorrichtung fest in das Gehäuse eingebaut und mit der genannten Baugruppe beim Einsetzen derselben in das Gehäuse in Wirkungsverbindung bringbar sind.

Damit kann erreicht werden, dass die verschmutzten Vorrichtungsteile durch Entfernen der Baugruppe aus der Vorrichtung leicht zugänglich und damit einfach zu reinigen sind, sei es durch Ausspülen unter fliessendem Wasser, sei es mit Hilfe einer Spüllmaschine. Dadurch, dass die zu reinigenden Teile vollständig von der eigentlichen Vorrichtung zu trennen sind, besteht keine Veranlassung, die Vorrichtung ausser Betrieb zu setzen, so dass die Abkühl- und Erwärmungsphase entfallen. Zudem ist insbesondere bei Verwendung einer Spülmaschine eine wesentlich gründlichere Reinigung der betroffenen Vorrichtungsteile möglich.

Zwar ist aus der DE-A-29 45 360 eine Vorrichtung der im Oberbegriff des Anspruchs 1 genannten Art bekannt geworden. Die Aufgabe der in jener DE-OS definierten Erfindung ist insbesondere darin zu sehen, die Service-Eigenschaften zu verbessern, d.h. mit anderen Worten, die Wartung der Kaffeemaschine zu erleichtern, und somit die Betriebssicherheit zu verbessern, insbesondere störungsbedingte Ausfälle der Kaffeemaschine zeitlich auf ein Mindestmass zu reduzieren.

Die hier beschriebene Kaffeemaschine enthält dazu eine Art Schublade, die im wesentlichen alle Elemente der Maschine aufnimmt. Im Gehäuse der Maschine selbst verbleiben, als fest montierte Organe, im wesentlichen lediglich noch der Wassertank 25 und die Steckdose 32 zur Herstellung der elektrischen Verbindung zwischen Gehäuse und Schublade. Namentlich geht aus der Beschreibung dieser DE-OS in Verbindung mit den Zeichnungen unter anderem hervor, dass das Heizorgan (der "Siedekessel") und die Pumpe mitsamt den zugehörigen elektrischen und hydraulischen Anschlüssen und Verbindungen in der Schublade fest eingebaut sind.

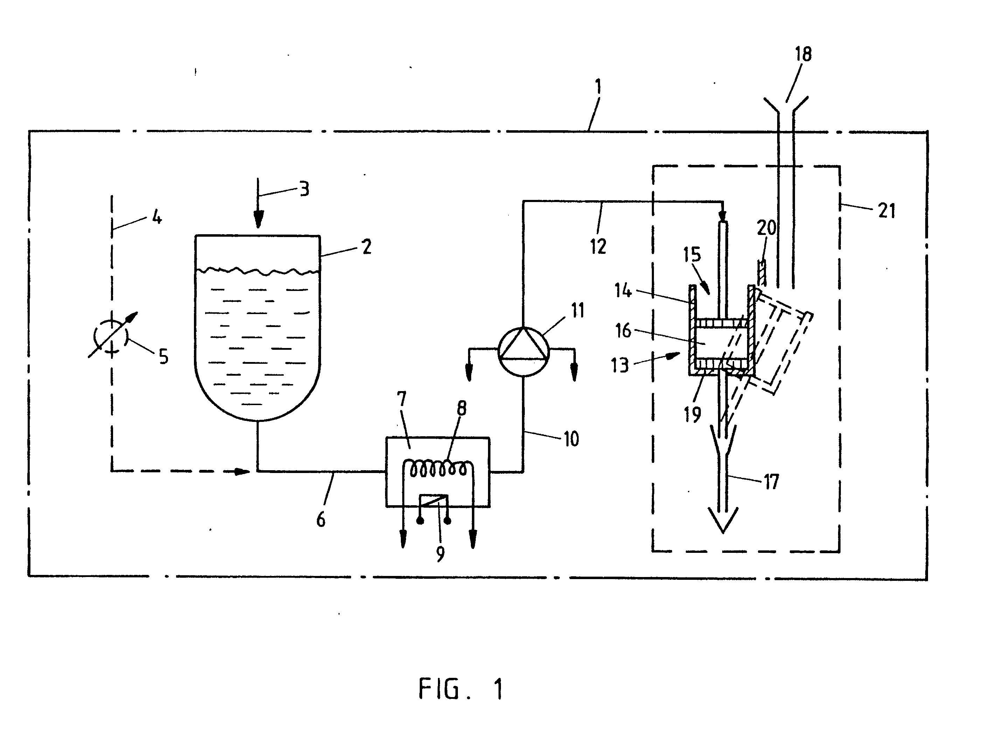

Nach den Fig. 1 - 4 ist ein aus dem Gehäuse herausziehbares Element in Form einer aus Grund- und Frontplatte gebildeten Schublade vorgesehen, die sämtliche wesentlichen Organe und Bestandteile der Kaffeemaschine aufnimmt. Dadurch wird der so gebildete Modul für Reparaturarbeiten leichter zugänglich als bei bekannten Ausführungsformen einer derartigen Kaffeemaschine, und eine Demontage der Organe und Teile der Maschine ist demzufolge leichter zu bewerkstelligen.

Für die periodische Reinigung der Kaffee führenden Elemente ist z.B. die Brüheinrichtung (nicht nur der Filterbecher) als Bauteil jeweils abzumontieren bzw. aus der Schublade auszubauen, indem zuerst die elektrischen und hydraulischen Verbindungsleitungen gelöst und danach die Brüheinrichtung selbst durch Lösen der Befestigungsschrauben entfernt wird.

Zur Aufnahme der zu einer Baugruppe zusammengefassten Teile der Vorrichtung gemäß Erfindung kann Baugruppenträger aus einem korrosionsresistenten Material vorgesehen sein, in welchem alle der Verschmutzung ausgesetzten Teile zusammengefasst sind. Dies erleichtert die Handhabung der Vorrichtung, indem lediglich der Baugruppenträger als ganzes zwecks gesamthafter Reinigung aus der Vorrichtung entnommen zu werden braucht.

Zur weiteren Erleichterung der Handhabung zeichnet sich eine Weiterbildung der Erfindung dadurch aus, dass der Baugruppenträger mit Führungsgliedern versehen ist, die mit im Gehäuse angeordneten Führungsorganen zusammenwirken.

Im Interesse einer vereinfachten Konstruktion mag es angezeigt erscheinen, wenn diese Baugruppe erste Betätigungsmittel zum Antrieb des der Brühkammer zugeordenten Verschlussorgans und zweite Betatigungsmittel zum Antrieb der Anordnung zum Ausstossen des ausgelaugten Getränkepulvers umfasst, mechanisch miteinander gekoppelt und durch ein gemeinsames Antriebsorgan angetrieben sind. Dadurch kann erreicht werden, dass die Kraftübertragung von einem innerhalb des Gehäuses fest angebrachten Antriebsmotor zum Einschubmodul lediglich an einer einzigen Stelle erfolgt.

Ein bevorzugtes Ausführungsbeispiel der erfindungsgemässen Vor richtung zeichnet sich dadurch aus, dass innerhalb des Gehäuses der Vorrichtung einesteils ein Frischwasseranschluss bzw. ein Frischwassertank, ein vorzugsweise elektrisches Heizelement zum Erhitzen des Frischwassers, eine vorzugsweise als elektrische Pumpe ausgebildete Fördervorrichtung zur Förderung des erhitzten Frischwassers, ein vorzugsweise elektrischer Antriebsmotor und die elektrischen Anschlüsse bzw. Verbindungen sowie die erforderlichen Steuer- und Regelorgane wie Schalter, Regler, Thermostaten und dgl. fest angebracht sind. Anderenteils ist innerhalb der Vorrichtung ein Einschubmodul, umfassend die Brühkammer mit dem ihr zugeordneten Verschlussorgan und mit dem Getränke-Auslass, die Anordnung zum Ausstossen bzw. Entfernen des ausgelaugten Getränkepulvers sowie erste Betätigunsmittel zum Antrieb des der Brühkammer zugeordneten Verschlussorgans und zweite Betätigungsmittel zum Antrieb der Anordnung zum Ausstossen bzw. Entfernen des ausgelaugten Getränkepulvers, auswechselbar angeordnet.

Dadurch ist erreicht, dass alle stromführenden bzw. nicht verschmutzenden Vorrichtungsteile geschützt im Gehäuse verbleiben, währenddem das Einschubmodul zwecks Reinigung leicht aus dem Gehäuse entnommen werden kann. Letzteres umfasst ja keine feuchtigkeitsempfindlichen Bestandteile, so dass beim Spülen desselben keinerlei besonderen Vorsichtsmassnahmen zu ergreifen sind.

Um den Betrieb der innerhalb des Einschubmoduls angeordneten Vorrichtungsteile zu gewährleisten, kann die Vorrichtung eine Kupplungsvorrichtung mit einem am Antriebsmotor angebrachten Antriebsglied und einem an der Baugruppe angebrachten, mit den genannten ersten und zweiten Betätigungsmitteln verbundenen Abtriebsglied umfassen, wobei das Antriebs- und das Abtriebsglied bei in das Gehäuse der Vorrichtung eingesetztem Einschubmodul kraftschlüssig miteinander verbunden werden.

Zweckmässigerweise kann diese Kupplungsvorrichtung zudem ein Sperrorgan zur Blockierung der Kupplung umfassen, in der Weise, dass das Antriebs- und das Abtriebsglied nur in einer vorgegebenen Relativstellung zueinander miteinander verbindbar bzw. voneinander lösbar sind. Damit ist sichergestellt, dass das Einschubmodul nur nach Ablauf eines vollständigen Arbeitszyklus der Vorrichtung daraus entnommen bzw. nur bei korrekter Stellung des Antriebs- und Abtriebsglieds zueinander eingesetzt werden kann, so dass die erforderliche Betriebssicherheit gewährleistet ist.

Im folgenden wird ein Ausführungsbeispiel der erfindungsgemässen Vorrichtung, unter Bezugnahme auf die beiliegenden Zeichnungen, näher erläutert. Es zeigen:

| | |
|---|---|
| Fig. 1 | die prinzipielle Anordnung der wichtigsten Elemente einer Kaffeemaschine und deren Verbindung miteinander, |
| Fig. 2 | eine schematische Ansicht einer teilweise geöffneten Kaffeemaschine von vorne mit eingesetztem Einschubmodul, |
| Fig. 3 | eine schematische Ansicht einer teilweise geöffneten Kaffeemaschine von vorne mit entferntem Einschubmodul, |
| Fig. 3a | eine schematische Ansicht des zur Maschine gemäss Fig. 3 gehörenden Einschubmoduls, und |
| Fig. 4 | eine teilweise geschnittene Seitenansicht einer Ausführungsmöglichkeit des Einschubmoduls. |

In der Figur 1 ist in abstrakter, schematischer Darstellung zu sehen, wie die wichtigsten Elemente einer Kaffeemaschine der gattungsgemässen Art miteinander verbunden sind. Innerhalb eines strichliniert angedeuteten Gehäuses 1 ist ein Frischwassertank 2 vorgesehen, der über eine Einfüllöffnung 3 mit frischem Kaltwasser versehen werden kann. Eine gestrichelt angedeutete, alternative Lösung besteht darin, dass Frischwasser direkt über eine Leitung 4 mit Ventil 5 zuzuführen. Jedenfalls gelangt das Frischwasser über eine Leitung 6 zu einem Heizaggregat 7, welches das darin enthaltene Wasser über ein vorzugsweise elektrisch betriebenes Heizelement 8 erhitzt. Es versteht sich von selbst, dass ein nur schematisch dargestellter und mit 9 bezeichneter Thermostat vorgesehen ist, der den Erhitzungsvorgang nach Erreichen einer vorgegebenen Temperatur unterbricht.

Vom Heizaggregat 7 gelangt das erhitzte Wasser über eine Leitung 10 zu einer Pumpe 11, welche dieses unter Druck über eine Leitung 12 zu einer generell mit 13 bezeichneten Brühkammer führt. Die Pumpe 11 ist vorzugsweise auch elektrisch betrieben; die erforderlichen, elektrischen Verbindungen für die Pumpe 11, für das Heizaggregat 7 und für weitere, noch zu diskutierende Elemente sind nicht dargestellt und bedürfen im Rahmen der vorliegenden Erfindung keiner weiteren Erläuterung, da deren Anordnung im Ermessensbereich des mit der Materie vertrauten Fachmannes liegen dürfte.

Die in Figur 1 nur grob dargestellte Brühkammer 13 umfasst eine im wesentlichen die Kammer begrenzende, vorzugsweise zylindrische Hülse 14, die mittel eines Verschlussorganes 15 verschliessbar ist. Dadurch ist ein Kammerraum 16 gebildet, der zur Aufnahme des Getränkepulvers dient. Durch Einführung des erhitzten Wassers unter Druck über Leitung 12 in den Kammerraum 16 wird das darin befindliche Getränkepulver aufgebrüht und das fertige Getränk tritt durch einen Auslass 17 aus. Zur Beschickung des Kammerraumes 16 dient ein Getränkpulvereinlass 18, der im folgenden noch näher erläutert werden wird.

Zur Entleerung der Brühkammer 13, nach erfolgter Zubereitung des Getränkes, ist ein innerhalb des Kammerraumes 16 verschiebbarer Kolben 19 vorgesehen; eine Relativbewegung zwischen Hülse 14 und Kolben 19 bewirkt ein Ausstossen des sogenannten Pulverkuchens. Dies kann dadurch geschehen, dass das Verschlussorgan 15 zurückgezogen und der Kolben 19 gegen oben bewegt wird. Danach kann die Brühkammer 13 in die gestrichelt gezeichnete Lage verschwenkt werden, wobei der Pulverkuchen durch ein Abstreiforgan 20 entfernt wird und in einen in Figur 1 nicht dargestellten Auffangbehälter fällt. In der gestrichelten Lage befindet sich die Brühkammer 13 unterhalb der Mündung der Einlassöffnung 18 für frisches Pulver, so dass der Kammerraum 16 nach Rückzug des Kolbens 19, mit frischem Pulver gefüllt werden kann. Anschliessend erfolgt die Rückschwenkung in die ausgezogene Lage, die Verschiebung des Verschlussorganes 15 zum Verschluss der Brühkammer 13 und die Beaufschlagung des Kammerraumes 16 mit erhitztem Druckwasser über Leitung 12.

Es leuchtet ein, dass im wesentlichen einerseits die Brühkammer 13 mit den ihr zugeordneten Hilfsorganen sowie die Anordnung zum Aus stossen bzw. Entfernen des Pulverkuchens einer Verschmutzung ausgesetzt sind. Die restlichen Elemente der Maschine, namentlich die Frischwasserzufuhr, die Heizung, die Pumpe sowie die zugeordneten Leitungen neigen höchstens in stark vermindertem Masse zu einer Verunreinigung und bedürfen daher nur selten eines Unterhalts. Aus diesem Grund ist die Brühkammer nebst Hilfselementen sowie die Anordnung zum Ausstossen bzw. Entfernen des Pulverkuchens lösbar innerhalb eines Einschubmoduls 21 angeordnet, damit diese Elemente zwecks Reinigung mühelos aus der Maschine entfernt werden können. In Figur 1 ist dieser Einschubmodul rein schematisch als gestrichelter Rahmen um die betreffenden Elemente herum gezeichnet; im folgenden wird ein praktisches Ausführungsbeispiel noch näher erläutert werden.

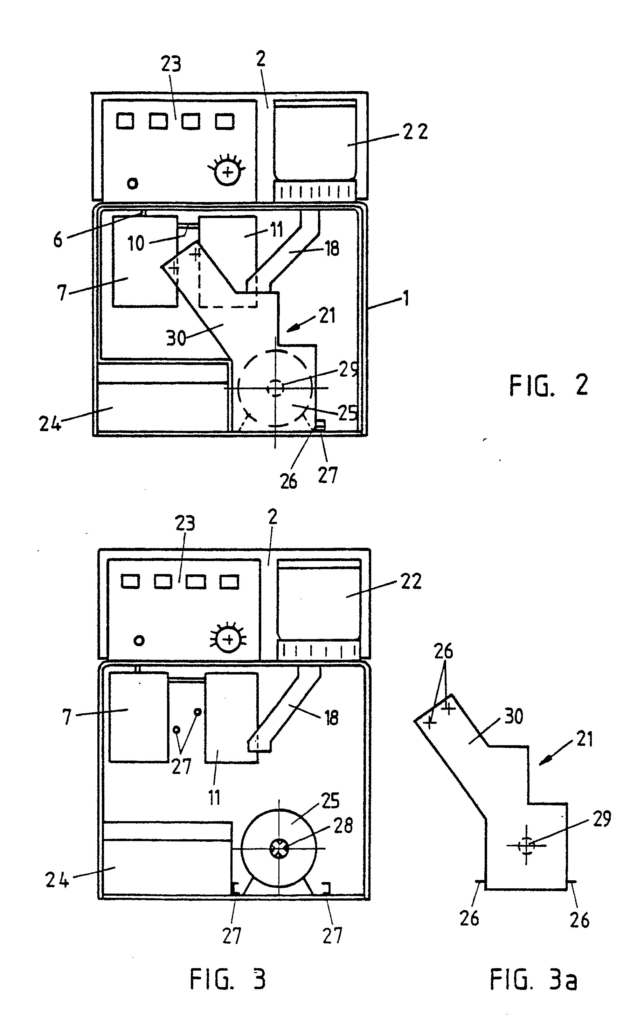

In der Figur 2 ist eine schematische Ansicht eines Ausführungsbeispieles einer erfindungsgemässen Kaffeemaschine zu sehen, deren Vorderfront geöffnet ist. In bzw. auf einem Gehäuse 1 ist ein Frischwassertank 2 angeordnet, der sich hinter einer Kaffeemühle 22 sowie hinter einer Steuer- und Bedienungseinheit 23 befindet. Der Tank 2 steht über eine Leitung 6 mit dem Heizaggregat 7 in Verbindung, welches seinerseits über die Leitung 10 an die Pumpe 11 angeschlossen ist. Von der Kaffeemühle 22 führt der Einlasskanal 18 an die Oberseite des Einschubmoduls 21 und mündet im Bereich der Oberseite der verschwenkten Brühkammer 13, um frisch gemahlenes Kaffeepulver in diese einzufüllen. Ausserdem ist eine Auffangschale 24 zur Aufnahme des ausgestossenen Pulverkuchens sowie ein Elektromotor 25 zum Antrieb der innerhalb des Einschubmoduls 21 untergebrachten Elemente vorgesehen.

Die Steuer- und Bedienungseinheit 23 enthält sämtliche zur Steuerung und Bedienung der Kaffeemaschine erforderlichen Bauteile, namentlich Bedienungsschalter, Regler, Kontrollampe sowie gegebenenfalls Relais und dgl. Auf die Ausbildung dieser Teile braucht an dieser Stelle nicht einzeln eingegangen zu werden. Ferner sind innerhalb des Gehäuses 1 sämtliche elektrischen Verbindungen enthalten und fest verdrahtet, namentlich zur Kaffeemühle 22, zum Heizaggregat 7 sowie zu dessen Thermostat 9, zur Pumpe 11 sowie zum Antriebsmotor 25. Auch diese Verbindungen sind in Figur 2 nicht im einzelnen dargestellt, da deren Ausbildung jedem Fachmann geläufig sein sollte.

Die Figur 3 zeigt eine schematische Ansicht einer teilweise geöffneten Kaffeemaschine gemäss Figur 2 von vorne, bei der jedoch das Einschubmodul 21 entfernt ist; dieses ist in Figur 3a dargestellt. Insbesondere ist aus den Figuren 3 und 3a deutlich zu sehen, dass das Einschubmodul 21 mit Führungsgliedern 26 versehen ist, welche mit innerhalb des Gehäuses 1 der Maschine angebrachten Füh-rungsorganen 27 zusammenwirken. Diese Füh-rungsglieder 26 bzw. Führungsorgane 27 dienen dazu, die Lage des Einschubmoduls 21 innerhalb des Gehäuses 1 zu definieren, so dass das Modul 21 mühelos in die Maschine eingesetzt bzw. daraus entfernt werden kann und dass die erwünschte kraftschlüssige Verbindung zwischen Einschubmodul 21 und Gehäuse 1 zuverlässig hergestellt wird.

Weiter ist aus Figur 3 ersichtlich, dass der Motor 25 mit einem Antriebsglied 28 versehen ist, das auf dessen Antriebswelle sitzt. Dieses Antriebsglied 28 bildet Teil einer Kupplungsvorrichtung, die ferner ein in Figur 3a gestrichelt angedeutetes Abtriebsglied 29 umfasst, welches mit dem Antriebsglied 28 des Motors 25 in kraftschlüssige Verbindung tritt, sobald das Modul 21 in das Gehäuse 1 eingeschoben ist. Das Abtriebsglied 29 dient dazu, sämtliche innerhalb des Einschubmoduls 21 befindlichen Organe und Einrichtungen anzutreiben, wie es im folgenden noch erläutert werden wird.

Zweckmässigerweise umfasst die Kupplungsvorrichtung ein nicht näher dargestelltes Sperrorgan, welches in der Weise zur Blockierung der Kupplung dient, dass das Antriebsglied 28 und das Abtriebsglied 29 nur in einer vorgegebenen Relativstellung zueinan der miteinander verbindbar bzw. voneinander lösbar sind. Zweckmässigerweise ist dabei die Anordnung so getroffen, dass nach Durchlaufen eines vollständigen Betriebszyklus, d.h. nach erfolgtem Ausstossen und Entfernen des Pulverkuchens, jedoch vor Einfüllen einer neuerlichen Pulvermenge in die Brühkammer 13, eine Ruhestellung definiert ist, in welcher eine Entfernung des Einschubmoduls 21 aus dem Gehäuse 1 ermöglicht ist. Entsprechendes gilt sinngemäss für das Einsetzen des Moduls 21 in die Maschine. Damit ist sichergestellt, dass die Vorrichtung stets vorschriftsgemäss funktioniert, indem der Benutzer zum Beispiel bei versehentlichen Verdrehen des Abtriebsgliedes 29 während der Reinigung des Moduls 21 gezwungen ist, dieses in seine Ausgangslage zurückzuverdrehen, bevor beim Einsetzen des Moduls 21 die zur Funktion der Maschine erforder-liche kraftschlüssige Verbindung zwischen An-triebsglied 28 und Abtriebsglied 29 erfolgen kann.

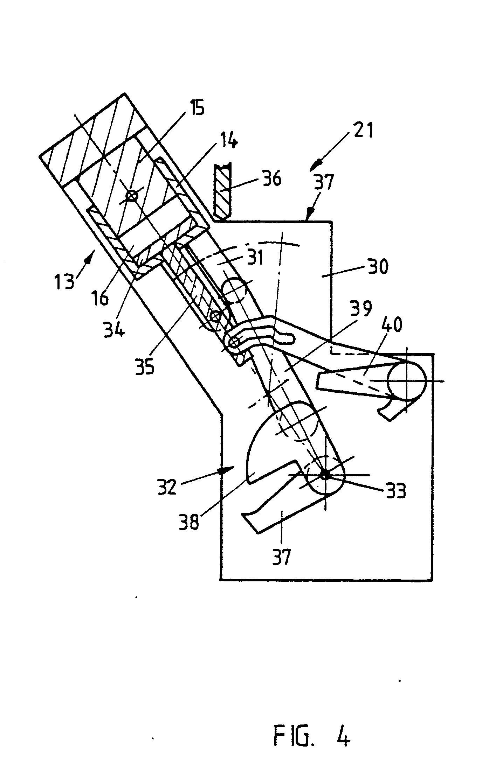

In der Figur 4 ist eine teilweise geschnittene Seitenansicht einer Ausführungsmöglichkeit des Einschubmoduls 21 zu sehen. Dieses bildet eine Baugruppe, welche im wesentlichen die Brühkammer nebst Verschlussorgan und Getränkeauslass sowie die Anordung zum Ausstossen bzw. Entfernen des Pulverkuchens aus bzw. von der Brühkammer und schliesslich die Antriebs- und Steuermittel für Brühkammer und Ausstossanordnung umfasst. Die genannten Teile werden durch zwei im wesentlichen plattenförmige Baugruppenträger 30 aufgenommen, wobei in der Figur 4 nur einer davon zu sehen ist. Diese Baugruppenträger 30 bestehen vorzugsweise aus korrosionsre sisentem Material, z.B. aus einem wärmebeständigen Kunststoff.

Zwischen den Baugruppenträgern 30 ist die die Brühkammer 13 begrenzende Hülse 14 angeordnet, in welche das im vorliegenden Beispiel fest angeordnete Verschlussorgan 15 ragt. Die Hülse 14 ist mittels eines Hebels 31 an einen Kurbeltrieb 32 angeschlossen, so dass bei Verdrehung der Achse 33 eine Längsverschiebung der Hülse 14 und damit ein Öffnen bzw. Verschliessen des Kammerraumes 16 erfolgt, welcher das Getränkepulver aufzunehmen bestimmt ist.

Im weiteren befindet sich innerhalb der Hülse 14 ein Ausstosskolben 34, dessen Kolbenstange 35 ebenfalls an den Kurbeltrieb 32 angeschlossen ist. Durch die im Rahmen der vorliegenden Erfindung nicht näher zu erläuternde Kinematik des Kurbeltriebs 32 erfolgt zu gegegener Zeit innerhalb des Arbeitszyklus eine Relativverschiebung des Kolbens 34 gegenüber der Hülse 14 und damit eine Verschiebung des Pulverkuchens aus der Hülse 14 heraus. Gleichzeitig wird bewirkt, dass sich die Hülse 14 abwärts bewegt, wobei deren Oberfläche an einem Abstreiforgan 36 vorbeistreicht, während-dem die Brühkammer 13 im Uhrzeigersinn soweit verschwenkt wird, bis sie eine im wesentlichen vertikale Lage einnimmt, bei der die nun oben offene Kammer 16 unterhalb der Oberfläche 37 und camit unterhalb der Mündung des Einlassorganes 18 liegt.

Die dazu erforderlichen Betätigungsorgane in Form vom Hebeln 37, 38, 39 und 40 stehen alle mit der Antriebsachse 33 in Wirkungsverbindung, so dass für den gesamten Antrieb einerseits der Brüh kammer 13 (Verschliessen bzw. Öffnen; Verschwenken bzw. Zurückschwenken) sowie der Abstreifanordnung lediglich ein einziger Kräfteangriffspunkt erforderlich ist, im vorliegenden Fall das Abtriebsglied 29. Dieses kann in einfacher Weise, wie vorstehend erwähnt worden ist, mit dem Antriebsglied 28 des Elektromotors 25 gekoppelt werden.

Vorzugsweise sind die wesentlichen Organe und Elemente der durch die Baugruppenträger aufgenommenen Brühkammer und Abstreifanordnung ebenfalls aus wärmebeständigem Kunststoff, bzw. wo erforderlich, aus korrosionsresistentem Stahl hergestellt. Auf die Ausbildung der gesamten Kinematik der Antriebs- und Betätigungsorgane 35 und 37-40 wird im Rahmen der vorliegenden Erfindung nicht näher eingegangen, da diese nicht Gegenstand der erfindungsgemässen Vorrichtung bildet.

## Ansprüche

1. Vorrichtung zur Zubereitung von Heissgetränken, insbesondere von Kaffe, mit einem Gehäuse (1), einem Frischwasseranschluss bzw. einem Frischwasser-Vorratstank (2), einem Heizorgan (7) zur Erhitzung des Frischwassers, einer Anordnung (11) zur Förderung des erhitzten Frischwassers unter Druck zu einer Brühkammer (13), die mit einem Verschlussorgan (15) und mit einem GetränkepulverEinlass (18) sowie mit einem Getränke-Auslass (17) versehen ist, und ggf. mit einer Anordnung (19; 34, 35, 36) zum Ausstossen des ausgelaugten Getränkepulvers aus der Brühkammer (13), sowie mit Antriebs- und Steuermitteln (31, 39, 40) für die genannten Anordnungen und Organe, wobei vorgegebene Teile der Vorrichtung als Baugruppe (21) lösbar mit dem Gehäuse (1) verbunden sind, und wobei die so gebildete Baugruppe (21) als Einschubmodul ausgebildet und als Ganzes in das Gehäuse (1) einschiebbar ist, dadurch gekennzeichnet, dass die Vorrichtung Baugruppenträger (30) aufweist, welche die einer Verschmutzung durch das Getränkepulver bzw. durch das zubereitete Getränk unterworfenen Teile, nämlich die Brühkammer (13), das Verschlussorgan (15), den Getränke-Auslass (17) sowie die Anordnung (19; 34, 35, 36) zum Ausstossen bzw. Entfernen des ausgelaugten Getränkepulvers, zur Bildung der Baugruppe (21) aufnehmen, während die verbleibenden Teile (2, 4, 7, 8, 11, 25) der Vorrichung fest in das Gehäuse (1) eingebaut und mit der genannten Baugruppe (21) beim Einsetzen derselben in das Gehäuse (1) in Wirkungsverbindung bringbar sind.

2. Vorrichtung nach Anspruch 1, dadurch gekennzeichnet, dass die Baugruppenträger (30) aus einem korrosionsresistenten Material bestehen.

3. Vorrichtung nach Anspruch 2, dadurch gekennzeichnet, dass die Baugruppenträger (30) aus Kunststoff bestehen.

4. Vorrichtung nach einem der Ansprüche 1, 2 oder 3, dadurch gekennzeichnet, dass die Baugruppenträger (30) mit Führungsgliedern (26) versehen sind, die mit im Gehäuse (1) angeordneten Führungsorganen (27) zusammenwirken.

5. Vorrichtung nach Anspruch 1, dadurch gekennzeichnet, dass erste Betätigungsmittel (31, 39) zum Antrieb des der Brühkammer (13) zugeordneten Verschlussorganes (15) und zweite Betätigungsmittel (35, 40) zum Ausstossen des ausgelaugten Getränkepulvers mechanisch gekoppelt und durch ein gemeinsames Antriebsorgan (25) angetrieben sind.

6. Vorrichtung nach Anspruch 5, dadurch gekennzeichnet, dass ein am Antriebsorgan (25) angebrachtes Antriebsglied (28) und ein an der Baugruppe (21) angebrachtes, mit den genannten ersten und zweiten Betätigungsmitteln verbundenes Abtriebsglied (29) bei eingesetzter Baugruppe (21) miteinander gekoppelt sind.

7. Vorrichtung nach einem der Ansprüche 1 bis 5 oder nach Anspruch 6, dadurch gekennzeichnet, dass sie eine Kupplungsvor richtung mit einem am Antriebsmotor (25) angebrachten Antriebsglied (28) und einem an der Baugruppe (21) angebrachten, mit den genannten ersten (31, 39) und zweiten (35, 40) Betätigungsmitteln verbundenes Abtriebsglied (29) umfasst, wobei das Antriebs-und das Abtriebsglied bei in das Gehäuse (1) der Vorrichtung eingesetzter Baugruppe (21) kraftschlüssig miteinander verbunden sind.

8. Vorrichtung nach Anspruch 7, dadurch gekennzeichnet, dass die Kupplungsvorrichtung ein Sperrorgan zur Blockierung der Kupplung umfasst, so dass das Antriebsglied (28) und das Abtriebsglied (29) nur in einer vorgegebenen Relativstellung miteinander verbindbar bzw. voneinander lösbar sind.

**Claims**

1. Apparatus for the preparation of hot drinks,. in particular of coffee, with a housing (1), a fresh water connection or a fresh water storage tank (2), a heating element (7) for heating the fresh water, an arrangement (11) for conveying the heated fresh water under pressure to an infusion cheer (13), which is provided with a closure member (15) and with a drink powder inlet (18) and with a drink outlet (17), and possibly with an arrangement (19;34, 35, 36) for discharging the leached drink powder from the infusion chamber (13), and with drive and control means (31, 39, 40) for the said arrangements and members, predetermined parts of the apparatus being detachably connected to the housing (1) as a sub-assembly (21), and the sub-assembly (21) Formed in this way being constructed as a slide-in module and can be slid as a whole into the housing (1), characterised in that the apparatus comprises sub-assembly supports (30), which receive the parts subject to contamination by the drink powder or by the prepared drink, namely the infusion chamber (13), the closure member (15), the drink outlet (17) as well as the arrangement (19;34, 35, 36) for the discharge or removal of the leached drink powder, for the formation of the sub-assembly (21), whereas the remaining parts (2, 4, 7, 8, 11, 25) of the apparatus are installed in a fixed manner in the housing (1) and can be brought into operative connection with the said sub-assembly (21), upon insertion of the latter in the housing (1).

2. Apparatus according to Claim 1, characterised in that the sub-assembly supports (30) consist of a corrosion-resistant material.

3. Apparatus according to Claim 2, characterised in that the sub-assembly supports (30) consist of synthetic material.

4. Apparatus according to one of Claims 1, 2 or 3, characterised in that the sub-assembly supports (30) are provided with guide members (26), which cooperate with guide parts (27) located in the housing (1).

5. Apparatus according to Claim 1, characterised in that first actuating means (31, 39) for driving the closure member (15) associated with the infusion chamber (13) and second actuating means (35, 40) for the discharge of the leached drink powder are connected mechanically and are driven by a common drive member (25).

6. Apparatus according to Claim 5, characterised in that a drive member (28) located on the drive part (25) and an output member (29) located on the sub-assembly (21) and connected to the said first and second actuating means, are connected to each other when the sub-asssembly (21) is inserted.

7. Apparatus according to one of Claims 1 to 5 or according to Claim 6, characterised in that it comprises a coupling device with a drive member (28) located on the drive motor (25) and an output member (29) located on the sub-assembly (21), connected to the said first actuating means (31, 39) and second actuating means (35, 40), the drive member and the output member being frictionally connected to each other when the sub-assembly (21) is inserted in the housing (1) of the apparatus.

8. Apparatus according to Claim 7, characterised in that the coupling device comprises a locking member for locking the coupling, so that the drive member (2) and the output member (29) can be connected to each other or disconnected from each other solely in a predetermined relative position.


**Revendications**

1. Dispositif pour la préparation de boissons chaudes, en particulier du café, comportant une enceinte (1), un raccordement d'eau fraîche ou un réservoir d'eau fraîche (2), un élément de chauffage (7) pour chauffer l'eau fraîche, un agencement (11) pour le transport de l'eau fraîche chauffée, sous pression, vers un compartiment d'infusion (13), qui est pourvu d'un opercule (15) et d'un orifice d'admission (18) de poudre pour boisson, ainsi que d'un orifice de sortie de boisson (17), et éventuellement un dispositif (19 ; 34, 35, 36) pour éjecter la poudre lessivée hors du compartiment d'infusion (13), ainsi que des moyens d'entraînement et de commande (31, 39, 40) pour les dispositifs et éléments susmentionnés, dans lequel certaines parties du dispositif sont reliées à l'enceinte (1) sous forme de bloc amovible (21), et dans lequel le bloc (21) ainsi constitué est réalisé sous la forme d'un module encastrable et peut être poussé dans l'enceinte (1) en tant qu'entité, caractérisé en ce que le dispositif comporte des supports de bloc (30) qui, pour former le bloc, reçoivent les parties soumises à un encrassement par la poudre pour boisson ou par la boisson finie, à savoir le compartiment d'infusion (13), l'opercule (15), l'orifice de sortie de boisson (17) ainsi que le dispositif (19 ; 34, 35, 36) d'éjection et d'élimination de la poudre lessivée pour boisson, tandis que les autres parties (2, 4, 7, 8, 11, 25) du dispositif sont encastrées dans l'enceinte d'une manière fixe et peuvent être amenées en contact de fonctionnement avec ledit bloc (21) lorsque celui-ci est mis en place dans l'enceinte (1).

2. Dispositif selon la revendication 1, caractérisé en ce que les supports de bloc (30) sont constitués d'un matériau résistant à la corrosion.

3. Dispositif selon la revendication 2, caractérisé en ce que les supports de bloc (30) sont constitués d'une matière plastique.

4. Dispositif selon l'une des revendications 1, 2 ou 3, caractérisé en ce que les supports de bloc (30) sont pourvus d'éléments de guidage (26) qui coopèrent avec des organes de guidage (27), disposés dans l'enceinte (1).

5. Dispositif selon la revendication 1, caractérisé en ce que des premiers moyens d'actionnement (31, 39), destinés à actionner l'opercule (15) associé au compartiment d'infusion (13), et des moyens d'actionnement secondaires (35, 40), destinés à éjecter la poudre lessivée pour boisson, sont couplés mécaniquement et commandés par un organe d'entraînement commun (25).

6. Dispositif selon la revendication 5, caractérisé en ce qu'un élément d'entraînement (28), logé sur un organe d'entraînement (25), et un élément de dérive (29), logé sur le bloc (21) et relié aux moyens d'actionnement premiers et secondaires, sont couplés ensemble lorsque le bloc (21) est en place.

7. Dispositif selon l'une des revendications 1 à 5, caractérisé en ce qu'il comprend un dispositif de couplage comportant un élément d'entraînement (28) logé sur un moteur d'entraînement (25) et un élément de dérive (29) logé sur le bloc (21) et relié aux moyens d'actionnement premiers (31, 39) et secondaires (35, 40), dans lequel l'élément d'entraînement et l'élément de dérive sont assemblés par complémentarité de formes lorsque le bloc (21) est en place dans l'enceinte (1) du dispositif.

8. Dispositif selon la revendication 7, caractérisé en ce que le dispositif de couplage comprend un élément de verrouillage pour bloquer le couplage, de sorte que l'élément d'entraînement (28) et l'élément de dérive (29) peuvent être assemblés ou séparés l'un de l'autre uniquement selon une position relative prédéterminée.

FIG. 1

FIG. 2

FIG. 3

FIG. 3a

FIG. 4